# EUROPEAN PATENT APPLICATION

(11) **EP 3 184 756 A1**
(43) Date of publication of application: **28.06.2017**
(21) Application number: 16203501.8
(22) Date of filing: 12.12.2016
(51) Int. Cl.: F01D 17/08, F04D 27/00, F02C 9/52

(54) **METHOD AND SYSTEM FOR STALL MARGIN MODULATION AS A FUNCTION OF ENGINE HEALTH**

(30) Priority: 22.12.2015 US 201514978236
(71) Applicant: General Electric Company, Schenectady, NY 12345 (US)
(72) Inventor: ADIBHATLA, Sridhar, Cincinnati, OH Ohio 45215 (US)
(74) Representative: Williams, Andrew Richard

(57) **Abstract**

A stall margin modulation (SMM) control system (180) in communication with a gas turbine engine (100) including a compressor (124) is described herein. The SMM control system (180) is configured to determine the stall margin (304) of the compressor (124), operate the gas turbine engine (100) using the determined stall margin (304), assess a health of the compressor (124), and modify the stall margin (304) based on the assessed health of the compressor (124).

## Description

### BACKGROUND

The field of the disclosure relates generally to gas turbine engines and, more particularly, to a method and system for modifying a compressor stall margin based on engine health.

In at least some known engine systems, compressors are designated and operated to avoid compressor stall even in "worst-case" conditions. Engine operation transients and potential engine deterioration are "built into" operating conditions, even for new engines, which increases what is known as a "stall margin," or an operability margin to avoid compressor stall. However, operating under a large stall margin leads to reduced engine performance, but safety and stability are necessarily prioritized over performance. Moreover, an actual compressor operability margin may be different from a designed or expected operability of the engine, due to inaccuracies in design assumptions and/or in variations of operation conditions and/or manufacturing tolerances. Therefore, it would be beneficial to have a system that is able to modify the stall margin, and corresponding operating conditions, according to an actual state of the engine in order to improve performance without sacrificing stability and/or to improve stability or time-on-wing without sacrificing performance.

### BRIEF DESCRIPTION

In one aspect, a method of modulating a compressor stall margin of a compressor based on a health of a gas turbine engine including the compressor is provided. The method includes determining the stall margin of the compressor, and operating the gas turbine engine using the determined stall margin. The method further includes assessing a health of the compressor, and modifying the stall margin based on the assessed health of the compressor.

In another aspect, a gas turbine engine is provided, including a core engine including a multistage compressor, and a stall margin modulation (SMM) control system in communication with the core engine. The SMM control system includes a processor in communication with a memory. The processor is programmed to determine the stall margin of the compressor, and operate the compressor under the stall margin. The processor is further programmed to assess a health of the compressor, and modify the stall margin based on the assessed health of the compressor.

In yet another aspect, a stall margin modulation (SMM) control system in communication with a gas turbine engine including a compressor is provided. The SMM control system includes a processor in communication with a memory. The processor is programmed to determine the stall margin of the compressor, and operate the compressor under the stall margin. The processor is further programmed to assess a health of the compressor, and modify the stall margin based on the assessed health of the compressor.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary gas turbine engine including a stall margin modulation (SMM) control system, in accordance with an example embodiment of the present disclosure;
FIG. 2 is a plot illustrating an unmodulated stall margin stack;
FIG. 3 is a plot illustrating a simplified relationship between stall margin and operating conditions in the gas turbine engine shown in FIG. 1;
FIG. 4 is a schematic illustration of an exemplary SMM control system shown in FIG. 1; and
FIG. 5 is a schematic diagram illustrating control of available variable geometries by the SMM control system shown in FIGS. 1 and 4.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a," "an," and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

Embodiments of the stall margin modulation (SMM) control systems described herein provide a method for modulating stall margin as a function of engine health. More specifically, the SMM control systems facilitate reducing stall margin and improving engine performance in newer engines, assessing engine health during operation, and increasing stall margin as the engine health deteriorates. Accordingly, newer and smaller engines with reduced turbine flow functions may be designed to operate with initially smaller stall margins, which decreases specific fuel consumption. As the engine deteriorates, the SMM control system activates variable geometries of the engine system (e.g., turbine bleed valve, modulated turbine control, etc.) to operatively increase the stall margin.

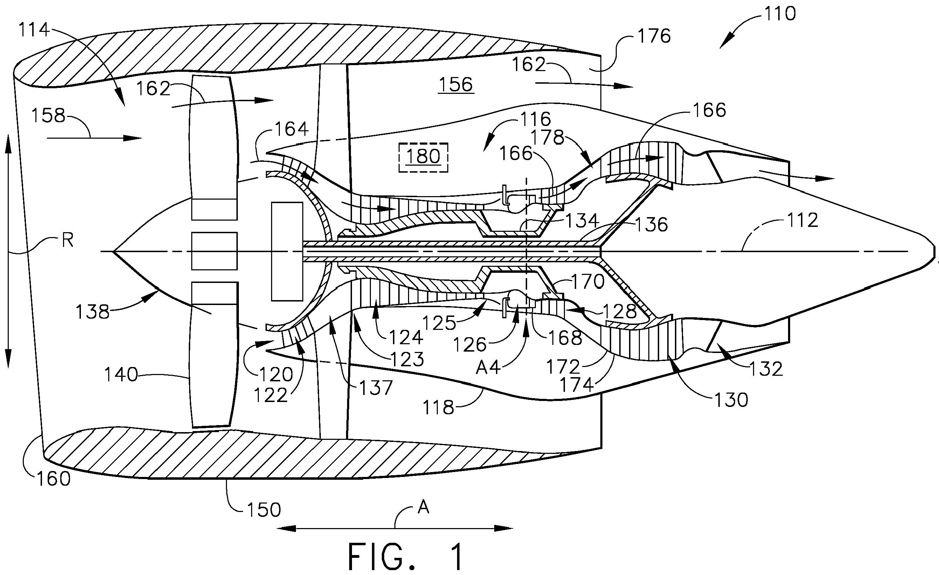

FIG. 1 is a schematic cross-sectional view of a gas turbine engine 100 in accordance with an exemplary embodiment of the present disclosure. In the example embodiment, gas turbine engine 100 is embodied in a high-bypass turbofan jet engine. As shown in FIG. 1, turbofan engine 100 defines an axial direction A (extending parallel to a longitudinal centerline 112 provided for reference) and a radial direction R. In general, turbofan engine 100 includes a fan assembly 114 and a core engine 116 disposed downstream from fan assembly 114.

In the example embodiment, core engine 116 includes an approximately tubular outer casing 118 that defines an annular inlet 120. Outer casing 118 encases, in serial flow relationship, a compressor section including a booster or low pressure (LP) compressor 122 and a high pressure (HP) compressor 124; a combustion section 126; a turbine section including a high pressure (HP) turbine 128 and a low pressure (LP) turbine 130; and a jet exhaust nozzle section 132. A high pressure (HP) shaft or spool 134 drivingly connects HP turbine 128 to HP compressor 124. A low pressure (LP) shaft or spool 136 drivingly connects LP turbine 130 to LP compressor 122. The compressor section, combustion section 126, the turbine section, and nozzle section 132 together define a core air flowpath 137.

During operation of turbofan engine 100, a volume of air 158 enters turbofan engine 100 through an associated inlet 160 of fan assembly 114, which includes fan 138. As volume of air 158 passes across a plurality of fan blades 140 of fan 138, a first portion 162 of volume of air 158 is directed or routed into a bypass airflow passage 156 (between core engine 116 and an annular nacelle 150) and a second portion 164 of volume of air 158 is directed or routed into core air flowpath 137, or more specifically into LP compressor 122. A ratio between first portion 162 and second portion 164 is commonly referred to as a bypass ratio. The pressure of second portion 164 is then increased as it is routed through high pressure (HP) compressor 124, from an inlet 123 to an exit 125 thereof, and into combustion section 126, where it is mixed with fuel and burned to provide combustion gases 166. In turbofan engine 100, in accordance with industry standards, an exit plane of combustion section 126 and an entry plane of HP turbine 128 is known as "station 4" or "plane 4," an area of which, orthogonal to centerline 112, is known as "A4." A flow of combustion gases 166 through area A4 is referred to herein as "HP turbine 128 flow function." In one embodiment, turbofan engine 100 includes a reduced area A4, which accordingly reduces HP turbine 128 flow function and improves efficiency and performance of core engine 116.

Combustion gases 166 are routed through HP turbine 128 where a portion of thermal and/or kinetic energy from combustion gases 166 is extracted via sequential stages of HP turbine stator vanes 168 that are coupled to outer casing 118 and HP turbine rotor blades 170 that are coupled to HP shaft or spool 134, thus causing HP shaft or spool 134 to rotate, which then drives a rotation of HP compressor 124. Combustion gases 166 are then routed through LP turbine 130 where a second portion of thermal and kinetic energy is extracted from combustion gases 166 via sequential stages of LP turbine stator vanes 172 that are coupled to outer casing 118 and LP turbine rotor blades 174 that are coupled to LP shaft or spool 136, which drives a rotation of LP shaft or spool 136 and LP compressor 122 and/or rotation of fan 138.

Combustion gases 166 are subsequently routed through jet exhaust nozzle section 132 of core engine 116 to provide propulsive thrust. Simultaneously, the pressure of first portion 162 is substantially increased as first portion 162 is routed through bypass airflow passage 156 before it is exhausted from a fan nozzle exhaust section 176 of turbofan engine 100, also providing propulsive thrust. HP turbine 128, LP turbine 130, and jet exhaust nozzle section 132 at least partially define a hot gas path 178 for routing combustion gases 166 through core engine 116.

In the illustrated embodiment, turbofan engine 100 further includes a stall margin modulation (SMM) control system 180, as described in more detail herein. Turbofan engine 100 is depicted in FIG. 1 by way of example only, and in other exemplary embodiments, turbofan engine 100 may have any other suitable configuration including for example, a turboprop engine.

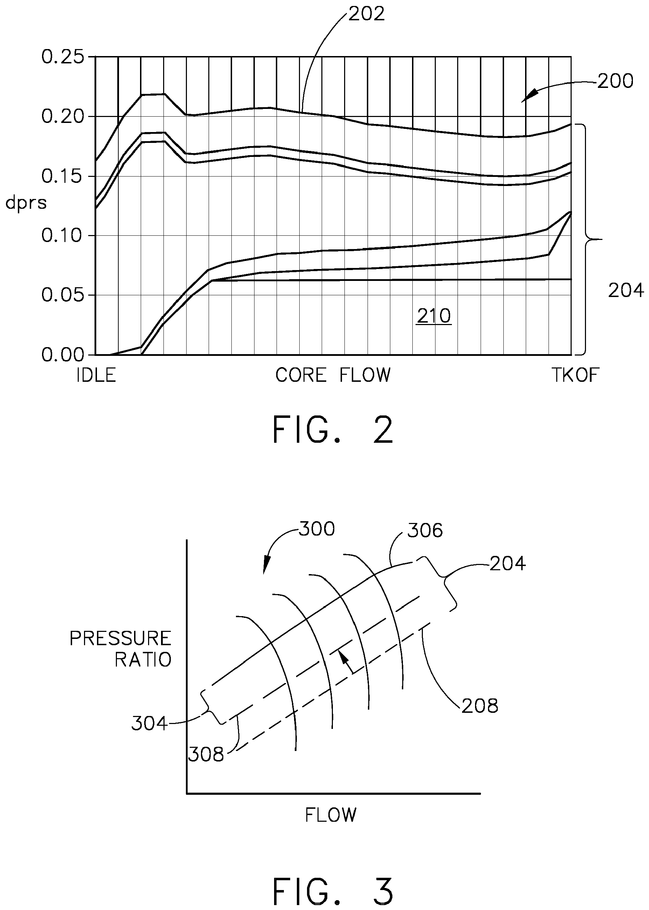

FIG. 2 is a plot 200 illustrating an unmodulated stall margin stack 202, and FIG. 3 is a plot 300 illustrating a simplified relationship between stall margin and operating conditions. More particularly, with continued reference to both FIG. 2 and FIG. 3, plot 200 depicts the various considerations that dictate a stall margin 204, 304 based on fuel flow (or power) to engine 100, from idle (low power or flow) to take-off (high power or flow). The stall margin 204, 304 indicates the necessary threshold between operating conditions 208 and 308, respectively, of an engine 100 and stall conditions 306 of that engine 100. Unmodulated stall margin stack 202 is implemented for a particular engine no matter the age, actual health, or actual deterioration level of engine 100. In plot 200, area 210 represents the portion of stall margin stack 202 attributable to engine deterioration concerns, typically about a 6% stall margin allocated specifically for deterioration concerns. For new engines 100, however, a level of actual deterioration is small or non-existent. Accordingly, area 210 is a very conservative estimation, especially for newer engines 100. As operating conditions 208, 308, or an "operating line," of an engine are designed to operate below a peak or maximum by the stall margin 204, 304, overly conservative estimations reduce engine performance.

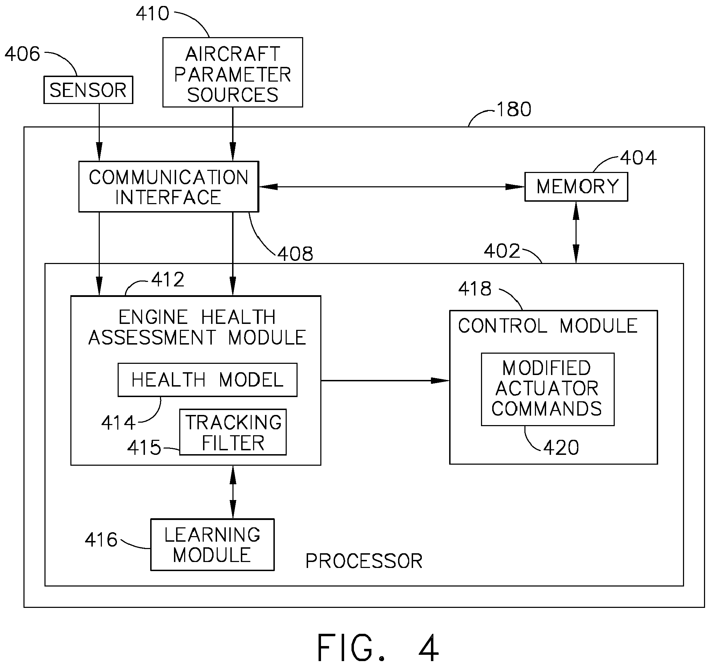

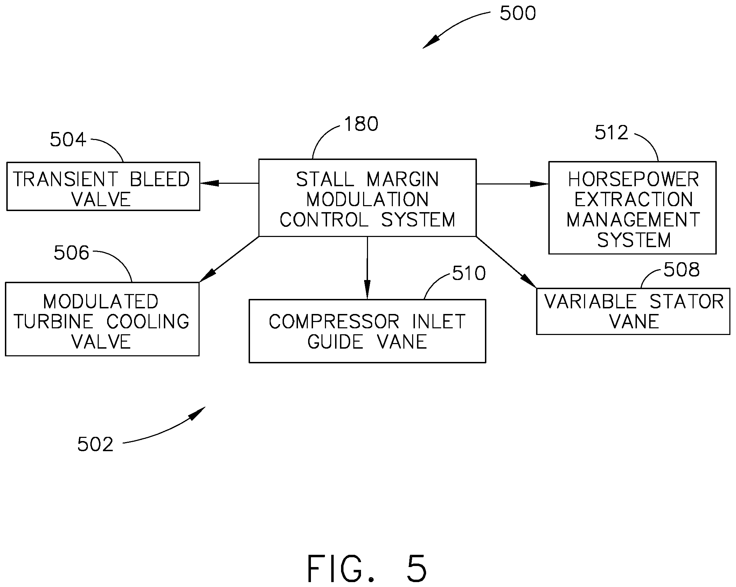

A stall margin modulation (SMM) control system 180, as described with respect to FIGS. 4 and 5, may be configured to shrink or narrow area 210 (for example, to about 3%, a reduction of approximately 3 points) for engines 100 with smaller HP turbine 128 flow function by determining an actual engine health. In other words, measuring and/or estimating an actual level of deterioration of engine 100 using SMM control system 180 facilitates implementing a less conservative stall margin 304 in new, more efficient engines 100 (and/or in existing engines 100) and slowly varying or increasing the stall margin towards stall margin 204 as engine 100 actually deteriorates. Accordingly, performance of engine 100 may be improved. In particular, reducing stall margin 204 by about 1 point results in a reduction in specific fuel consumption (SFC) of about 0.16%. Thus, even halving area 210, or reducing stall margin 204 by 3 points, SFC may be reduced by about 0.5%. In another embodiment, SMM control system 180 may be implemented, as described, to modulate stall margin 204 for existing engines 100. For example, in one embodiment, overall stall margin 204 is insufficient to provide a desired operability margin for a required or increased time-on-wing for a particular engine 100. In such cases, SMM control system 180 may be used to decrease operating conditions 208, 308 and, therefore, increase stall margin 204 whenever an assessed or sensed stall margin is insufficient for safe operation of engine 100.

FIG. 4 is a schematic illustration of an exemplary stall margin modulation (SMM) control system 180 (shown in FIG. 1). In one embodiment, SMM control system 180 includes or is integral to a full authority digital engine control (FADEC) computer system of an aircraft including turbofan engine 100 (shown in FIG. 1). SMM control system 180 is configured to monitor operating conditions 308 (shown in FIG. 3) of engine 100 to determine stall margin 304 (also shown in FIG. 3) thereof. In one embodiment, as HP turbine 128 (shown in FIG. 1) flow function contributes to a stall margin of engine 100, for a new engine 100 including reduced area A4, stall margin 304 is initially reduced to a relative minimum, as further described herein. SMM control system 180 is configured to monitor a health of engine 100 (e.g., of HP compressor 124, shown in FIG. 1) while operating engine 100 under stall margin 304. As engine 100 health degrades, for example, due to deterioration, dirt, and/or wear, SMM control system 180 is configured to increase stall margin 304 of engine 100. In the example embodiment, SMM control system 180 is configured to use available variable geometries, as described further herein, to lower operating conditions 308 of engine 100 to thereby increase stall margin 304.

In the illustrated embodiment, SMM control system 180 includes a processor 402 and a memory 404, and is in communication with at least one engine sensor 406 and source(s) of aircraft parameters 410, such as flight phase data, altitude, Mach number, and/or bleed data. In one particular embodiment, sensor 406 includes a compressor active stability management (CASM) sensor 406 configured to monitor a health of HP compressor 124. In an alternative embodiment, sensor 406 includes temperature and pressure sensors at inlet 123 and exit 125 (both shown in FIG. 1) of HP compressor 124. In yet another embodiment, sensors 406 are positioned throughout engine 100, for example, in and/or adjacent to one of fan 138, HP compressor 124, HP turbine 128, LP turbine 130, and/or any other component of engine 100. SMM control system 180 further includes a communication interface 408, such that SMM control system 180 is capable of communicating with a remote device such as sensor 406 and one or more aircraft control systems or other sources of aircraft parameters 410. Communication interface 408 may include, for example, a wired or wireless network adapter or a wireless data transceiver for use with a network. For example, communication interface 408 may be in wired or wireless communication with an aircraft control system or other source(s) of aircraft parameters 410 and may receive signals (e.g., requests, instructions, values) therefrom.

Processor 402 is configured to execute computer-readable instructions (stored, for example, in memory 404) to implement an engine health assessment module 412. Engine health assessment module 412 is configured to process sensor data from sensor(s) 406 and/or aircraft parameters from source(s) 410 to estimate the health of HP compressor 124 throughout the lifetime thereof. It should be understood that engine health assessment module 412 may be configured to monitor the health of other component(s) of engine 100 as well. In one embodiment, engine health assessment module 412 includes a health model 414, which includes or is otherwise in communication with a tracking filter 415. Health model 414 models expected engine conditions and aircraft parameters according to flight phase, engine age, time-on-wing, and/or other parameters. Tracking filter 415, put broadly, is a parameter estimation algorithm used to tune or calibrate health model 414 in accordance with actual engine characteristics, as determined using sensor data from sensor(s) 406 and/or aircraft parameters from source(s) 410. In other words, tracking filter 415 identifies discrepancies between health model 414 and actual engine conditions and tunes health model 414 accordingly. Engine health assessment module 412 is configured to monitor these discrepancies as an estimation of the health of HP compressor 124.

Processor 402 further includes a control module 418 configured to use output from engine health assessment module 412 to generate modified actuator commands 420. In addition, output from engine health assessment module 412 may be stored in learning module 416 and/or retrieved therefrom for calibration purposes (e.g., calibration of health model 414 and/or of other aircraft systems, not shown in FIG. 4). Control module 418 (and/or any other component of processor 402 and/or SMM control system 180) is further configured to use modified actuator commands 420 to control components of engine 100 to modulate a stall margin thereof (e.g., stall margin 204 and/or 304, shown in FIGS. 2 and 3). In particular, modified actuator commands 420 include controls for fuel flow components and/or any available variable geometry on engine 100 to vary operating conditions 308 of engine 100, as described further herein. For example, when engine health assessment module 412 determines that the health of HP compressor 124 has deteriorated past a threshold level, control module 418 may generate and use actuator commands 420 to drop operating conditions 308 to increase stall margin 304 to a suitable level. As another example, control module 418 may modify fuel flow commands 420 to compensate for any loss in acceleration characteristics of engine 100, as indicated according to sources of aircraft parameters 410, due to changes in variable geometries.

FIG. 5 is a schematic diagram 500 illustrating control of available variable geometries 502 by stall margin modulation (SMM) control system 180 (shown in FIGS. 1 and 4). More particularly, in the illustrated embodiment, as SMM control system 180 determines that engine 100, and in particular HP compressor 124, has deteriorated, SMM control system 180 controls one or more of variable geometries 502 to lower operating conditions 308 (shown in FIG. 3) of engine 100 and increase stall margin 304 (also shown in FIG. 3). Variable geometries 502 include a transient bleed valve (TBV) 504, a modulated turbine cooling (MTC) valve 506, a variable stator vane (VSV) 508, a compressor inlet guide vane (CIGV) 510, and a horsepower extraction (HPX) management system 512. TBV 504 is configured to control an amount of bleed air entering LP turbine 130 nozzles. MTC valve 506 is configured to modulate a flow of cooling air through HP turbine rotor blades 170 and/or LP turbine rotor blades 174. VSV 508 and CIGV 510 are configured to control airflow into HP compressor 124. HPX management system 512 is configured to manage an amount of power extracted from core engine 116 to be converted into electrical energy. SMM control system 180 may use one or more of variable geometries 502 based on output from engine health assessment module 412 (shown in FIG. 4), in particular an assessed health/deterioration level of a HP compressor 124. For example, SMM control system 180 may control one or more of variable geometries 502 if assessed compressor health falls below a predetermined threshold (or a level of deterioration exceeds a predetermined threshold).

In one embodiment, as HP compressor 124 deteriorates, SMM control system 180 is configured to control TBV 504 to vent flow overboard during acceleration transients, which recovers HP compressor 124 (shown in FIG. 1) stall margin while minimizing impact on the temperature at an outlet plane (not shown) of HP compressor 124 and an inlet plane (now shown) of a first stage of HP turbine 128 (also shown in FIG. 1). In other embodiments, SMM control system 180 is configured to control MTC valve 506 to increase cooling flow to HP turbine 128, close VSV 508, and/or close CIGV 510. Additionally or alternatively, SMM control system 180 is configured to control HPX management system 512 to reduce transient HPX, which recovers HP compressor 124 (shown in FIG. 1) stall margin while minimizing impact on acceleration time. SMM control system 180 is further configured to modify fuel flow commands 420 (shown in FIG. 4) to compensate for any loss in acceleration characteristics of engine 100 due to changes in variable geometries 502.

The above-described stall margin modulation (SMM) control systems provide a method for increasing or decreasing compressor stall margin of an engine according to compressor health. Specifically, the above-described SMM control system includes an engine health assessment module configured to assess compressor health and modulate the stall margin accordingly. Thus, for newer and/or smaller engines, stall margin can be reduced or minimized such that operating conditions may be increased, thereby engine performance can be improved. Improved engine performance leads to reduced specific fuel consumption (SFC). The SMM control system monitors the compressor health and, as the compressor deteriorates, the SMM control system lowers the operating conditions to increase the stall margin to maintain reliability of the engine. The SMM control system may be implemented in older engines as well, to increase time-on-wing by increasing stall margin in accordance with continued engine deterioration, a capability unrealized in engines without stall margin modulation.

An exemplary technical effect of the methods, systems, and apparatus described herein includes at least one of: (a) improving efficiency and performance of newer engines; (b) extending time-on-wing of existing engines by facilitating further increase of stall margin; and (c) utilizing existing systems to modify operating conditions in response to compressor deterioration.

Exemplary embodiments of stall margin modulation (SMM) control systems are described above in detail. The SMM control systems, and methods of operating such systems and component devices are not limited to the specific embodiments described herein, but rather, components of the systems and/or steps of the methods may be utilized independently and separately from other components and/or steps described herein. For example, the SMM control systems may be used in any compressor or engine systems operating under a stall margin, and should not be construed to be limited to gas turbofan engines.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method of modulating a compressor stall margin of a compressor based on a health of a gas turbine engine including the compressor, said method comprising:
   determining the stall margin of the compressor;
   operating the gas turbine engine using the determined stall margin;
   assessing a health of the compressor; and
   modifying the stall margin based on the assessed health of the compressor.
2. The method of clause 1, wherein said assessing a health of the compressor comprises estimating the health of the compressor using a compressor active stability margin (CASM) sensor.
3. The method of clause 1 or 2, wherein said assessing a health of the compressor comprises estimating the health of the compressor using at least one of pressure and temperature sensors at an inlet and an exit of the compressor.
4. The method of any preceding clause, wherein said assessing a health of the compressor comprises estimating the health of the compressor using a health model and a parameter estimation algorithm.
5. The method of any preceding clause, wherein said modifying the stall margin comprises modifying the stall margin using a variable geometry of the gas turbine engine, wherein the variable geometry includes at least one of a transient bleed valve (TBV), a modulated turbine cooling (MTC) valve, a variable stator vane (VSV), and a compressor inlet guide vane (CIGV).
6. The method of any preceding clause, wherein modifying the stall margin based on the assessed health of the compressor comprises increasing the stall margin of the compressor.
7. The method of any preceding clause, wherein increasing the stall margin of the compressor comprises operating the gas turbine engine using the increasing stall margin.
8. The method of any preceding clause, wherein the gas turbine engine includes a HorsePower Extraction (HPX) management system, and wherein said modifying the stall margin comprises increasing the stall margin using the HPX management system.
9. A gas turbine engine comprising:
   a core engine including a multistage compressor; and
   a stall margin modulation (SMM) control system in communication with said core engine, said SMM control system comprising a processor in communication with a memory, said processor programmed to:
      determine the stall margin of the compressor;
      operate the gas turbine engine using the determined stall margin;
      assess a health of the compressor; and
   modify the stall margin based on the assessed health of the compressor.
10. The gas turbine engine of clause 9, wherein said processor is further programmed to estimate the health of the compressor using a health model and a parameter estimation algorithm.
11. The gas turbine engine of clause 9 or 10, wherein said processor is further programmed to estimate the health of the compressor using at least one of pressure and temperature sensors at an inlet and an exit of the compressor.
12. The gas turbine engine of any of clauses 9 to 11, further comprising a compressor active stability margin (CASM) sensor, wherein said processor is further programmed to estimate the health of the compressor using the CASM sensor.
13. The gas turbine engine of any of clauses 9 to 12, wherein said processor is further programmed to modify the stall margin using a variable geometry of the gas turbine engine, wherein the variable geometry includes at least one of a transient bleed valve (TBV), a modulated turbine cooling (MTC) valve, a variable stator vane (VSV), and a compressor inlet guide vane (CIGV).
14. The gas turbine engine of any of clauses 9 to 13, wherein said processor is further programmed to increase the stall margin of the compressor using the variable geometry.
15. The gas turbine engine of any of clauses 9 to 14, wherein said processor is further programmed to operate the gas turbine engine using increased stall margin.
16. The gas turbine engine of any of clauses 9 to 15, further comprising a HorsePower Extraction (HPX) management system, and wherein said processor is further programmed to increase the stall margin using the HPX management system.
17. A stall margin modulation (SMM) control system in communication with a gas turbine engine including a compressor, said SMM control system including a processor in communication with a memory, said processor programmed to:
   determine a stall margin of the compressor;
   operate the gas turbine engine using the determined stall margin; assess a health of the compressor; and
   modify the stall margin based on the assessed health of the compressor.
18. The SMM control system of clause 17, wherein said processor is further programmed to estimate the health of the compressor using a health model and a parameter estimation algorithm.
19. The SMM control system of clause 17 or 18, further comprising a compressor active stability margin (CASM) sensor, wherein said processor is further programmed to estimate the health of the compressor using the CASM sensor.
20. The SMM control system of any of clauses 17 to 19, wherein said processor is further programmed to estimate the health of the compressor using at least one of pressure and temperature sensors at an inlet and an exit of the compressor.
21. The SMM control system of any of clauses 17 to 20, wherein said processor is further programmed to modify the stall margin using a variable geometry of the gas turbine engine, wherein the variable geometry includes at least one of a transient bleed valve (TBV), a modulated turbine cooling (MTC) valve, a variable stator vane (VSV), and a compressor inlet guide vane (CIGV).
22. The SMM control system of any of clauses 17 to 21, wherein said processor is further programmed to increase the stall margin of the compressor using the variable geometry.
23. The SMM control system of any of clauses 17 to 22, wherein said processor is further programmed to operate the gas turbine engine using the increased stall margin.
24. The SMM control system of any of clauses 17 to 23, further comprising a HorsePower Extraction (HPX) management system, wherein said processor is further programmed to increase the stall margin of the compressor using the HPX management system.

## Claims

1. A gas turbine engine (100) comprising:
a core engine (116) including a multistage compressor (124); and
a stall margin modulation (SMM) control system (180) in communication with said core engine (116), said SMM control system (118) comprising a processor (402) in communication with a memory (404), said processor (402) programmed to:
determine the stall margin (304) of the compressor (124);
operate the gas turbine engine (100) using the determined stall margin (304);
assess a health of the compressor (124); and
modify the stall margin (304) based on the assessed health of the compressor (124).

2. The gas turbine engine (100) of Claim 1, wherein said processor (402) is further programmed to estimate the health of the compressor (124) using a health model (414) and a parameter estimation algorithm (415).

3. The gas turbine engine (100) of Claim 1 or 2, wherein said processor (402) is further programmed to estimate the health of the compressor (124) using at least one of pressure and temperature sensors (406) at an inlet (123) and an exit (125) of the compressor (124).

4. The gas turbine engine (100) of any preceding Claim, further comprising a compressor active stability margin (CASM) sensor (406), wherein said processor (402) is further programmed to estimate the health of the compressor (124) using the CASM sensor (406).

5. The gas turbine engine (100) of any preceding Claim, wherein said processor (402) is further programmed to increase the stall margin (304) using a variable geometry (502) of the gas turbine engine (100), wherein the variable geometry (502) includes at least one of a transient bleed valve (TBV) (504), a modulated turbine cooling (MTC) valve (506), a variable stator vane (VSV) (508), and a compressor inlet guide vane (CIGV) (510).

6. A stall margin modulation (SMM) control system (180) in communication with a gas turbine engine (100) including a compressor (124), said SMM control system (180) including a processor (402) in communication with a memory (404), said processor (402) programmed to:
determine the stall margin (304) of the compressor (124);
operate the gas turbine engine (100) using the determined stall margin (304);
assess a health of the compressor (124); and
modify the stall margin (304) based on the assessed health of the compressor (124).

7. The SMM control system (180) of Claim 6, wherein said processor (402) is further programmed to estimate the health of the compressor (124) using a health model (414) and a parameter estimation algorithm (415).

8. The SMM control system (180) of Claim 6 or 7, further comprising a compressor active stability margin (CASM) sensor (406), wherein said processor (402) is further programmed to estimate the health of the compressor (124) using the CASM sensor (406).

9. The SMM control system (180) of any of Claims 6 to 8, wherein said processor (402) is further programmed to estimate the health of the compressor (124) using at least one of pressure and temperature sensors (406) at an inlet (123) and an exit (125) of the compressor (124).

10. The SMM control system (180) of any of Claims 6 to 9, wherein said processor (402) is further programmed to increase the stall margin (304) using a variable geometry (502) of the gas turbine engine (100), wherein the variable geometry (502) includes at least one of a transient bleed valve (TBV) (504), a modulated turbine cooling (MTC) valve (506), a variable stator vane (VSV) (508), and a compressor inlet guide vane (CIGV) (510).

11. A method of modulating a compressor stall margin of a compressor based on a health of a gas turbine engine (100) including the compressor (124), said method comprising:
determining the stall margin (304) of the compressor (124);
operating the gas turbine engine (100) using the determined stall margin (304);
assessing a health of the compressor (124); and
modifying the stall margin (304) based on the assessed health of the compressor (124).

12. The method of Claim 11, wherein said assessing a health of the compressor (124) comprises estimating the health of the compressor (124) using a compressor active stability margin (CASM) sensor (406).

13. The method of Claim 11 or 12, wherein said assessing a health of the compressor (124) comprises estimating the health of the compressor (124) using at least one of pressure and temperature sensors (406) at an inlet (123) and an exit (125) of the compressor (124).

14. The method of any of Claims 11 to 13, wherein said assessing a health of the compressor (124) comprises estimating the health of the compressor (124) using a health model (414) and a parameter estimation algorithm (415).

15. The method of any of Claims 11 to 14, wherein said modifying the stall margin (304) comprises modifying the stall margin (304) using a variable geometry (502) of the gas turbine engine (100), wherein the variable geometry (502) includes at least one of a transient bleed valve (TBV) (504), a modulated turbine cooling (MTC) valve (506), a variable stator vane (VSV) (508), and a compressor inlet guide vane (CIGV) (510).
